Europäisches Patentamt

European Patent Office    (11) Publication number: **0 313 920**

Office européen des brevets    **A2**

(12)    **EUROPEAN PATENT APPLICATION**

(21) Application number: 88116964.3    (51) Int. Cl.4: **B01D 29/14**

(22) Date of filing: 12.10.88

The title of the invention has been amended (Guidelines for Examination in the EPO, A-III, 7.3).

(30) Priority: 30.10.87 JP 273532/87

(43) Date of publication of application:
03.05.89 Bulletin 89/18

(84) Designated Contracting States:
DE FR GB IT

(71) Applicant: **Takano Corporation**
**60, Miyacho 1-chome**
**Ohmiya-shi Saitama-ken(JP)**

(72) Inventor: **Wada, Yoneji**
**6-18, Harigaya 4-chome**
**Urawa-shi Saitama-ken(JP)**
Inventor: **Suzuki, Tadashi**
**1598-42, Kougasaka**
**Machida-shi Tokyo(JP)**

(74) Representative: **Strehl, Schübel-Hopf,**
**Groening, Schulz**
**Maximilianstrasse 54 Postfach 22 14 55**
**D-8000 München 22(DE)**

(54) **Method of making filter body formed of cellulose-spinbanded non-woven cloth.**

(57) A method of making a filter body for a filter of the depth layer type comprises helically winding a braid (3) of cellulose-spanbond nonwoven cloth around a bobbin having many pores and reciprocating in the axial direction while rotating. The braid is thus wound clockwise around the bobbin during the reciprocating movement in one direction and counterclockwise during the reciprocating movement in the other direction so that intersections occur, and the clockwise wound braids (5-n, 5-n + 1) and the counter-clockwise wound braids (6-n, 6-n + 1) are successively stacked in aslant relation while partly overlapping each other to form roof-shaped structures. The height of the roof-shaped structures formed in subsequent cycles is progressively increased toward the outer periphery of the filter body so as to establish a distribution in which the space density increases progressively from the outer periphery toward the inner part of the filter body.

FIG. 3

# METHOD OF MAKING FILTER BODY FORMED OF CELLULOSE-SPANBOND NONWOVEN CLOTH

## BACKGROUND OF THE INVENTION

### Field of the Invention

This invention relates to a method of making a filter of depth layer type. More particularly, this invention relates to a method of the kind described above in which cellulose-spanbond nonwoven cloth is used to form a filter body which has greatly improved mechanical and chemical properties and purifies a fluid with high reliability as compared to various filter bodies of prior art filters of depth layer type most frequently used hitherto and formed of cellulose.

### Description of the prior Art

Depth layer filtration is known as a method for efficiently arresting a large amount of impurities contained in a fluid, and there are various filters based on such a principle. It is also known that, when a filter is used to remove impurities contained in a fluid such as oil, the performance of the filter is greatly affected by the size and kind of the impurities, especially, by admixture of water which is also a fluid. According to a practice widely employed now in this field, water contained in oil is removed together with other particulate impurities. As a filtering material for forming a filter body which satisfies the above requirement, a cellulosic material such as pulp or cotton linters is used after being processed into the form of, for example, tissure papers or mats. As a practical example, roll tissues or tissue papers are finely cut into very small pieces, and these pieces are molded under compression to provide such a filter body. As another practical example, fluffy fibers of cellulose are molded under compression to provide such a filter body. Especially, a roll-tissue filter body made by preparing $\alpha$-cellulose by refining pulp of needle-leaf trees, processing fibers of $\alpha$-cellulose into the form of tissue papers and winding the tissue papers into the form of a roll is widely used for the filtration of a fluid such as lubricating oil .

However, the filter body formed of the $\alpha$-cellulose has the following disadvantages :

a ) The mechanical strength, especially, the compression strength, tensile strength, wet strength, etc. of the $\alpha$-cellulose are low. Therefore, the filter body cannot withstand the pressure produced by the flow of a fluid therethrough.

b ) The quality of pulp is not uniform but changes depending on various factors including district of production and weather, because the pulp is a natural material. Therefore, the quality of the $\alpha$-cellulose is necessarily non-uniform.

c ) Due to the intrinsic wettability of the $\alpha$-cellulose, the strength and shape of the filter body change greatly depending on the water content of a fluid. Especially, a decrease in the strength is a vital defect of a filtering material.

d ) A binder is necessarily used during shaping the $\alpha$-cellulose into the form of, for example, tissue papers. This binder dissolves in a fluid especially when water is present in the fluid. As a result, the tissue papers are locally dissolved and the fluid is contaminated by the binder.

e ) The $\alpha$-cellulose is not always uniformly molded, and the performance of molded filter bodies is not always uniform.

Cellulose-spanbond nonwoven cloth is a filtering material which replaces the $\alpha$-cellulose. Unlike the $\alpha$-cellulose, natural fibers are not used to form the cellulose-spanbond nonwoven cloth. This cellulose-spanbond nonwoven cloth is produced by melting pulp, extruding the molten pulp from nozzles and cooling the extruded molten pulp to obtain continuous filaments, and welding under heat on chemically processing the filaments into the form of a sheet. There, the quality of the cellulose-spanbond nonwoven cloth can be completely controlled.

A sheet of cellulose-spanbond nonwoven cloth produced in the manner described above has the following features when compared with tissue papers the $\alpha$-cellulose :

a ) The mechanical strength is very high.

b ) It is not directly produced by processing natural fibers. Therefore, its quality is always fixed.

c ) The wettability does not change regardless of whether it is placed in a dry state or a wet state, and the wet strength does not change either. Its water absorption and hydration characteristic is about 2.5 times as high as that of the $\alpha$-cellulose.

d ) No binder is used during shaping the filaments into the form of the sheet. Therefore, the sheet is not dissolved in water, and the prior art problem of flow-out binder does not occur.

Although the sheet cellulose-spanbond nonwoven cloth has the excellent features described above, its excessively high elasticity is disadvantageous for making a filter body of a filter of depth layer type.

That is, it is an essential requirement for the body of a filter of depth layer type that the space density of the filter body changes continuously from low to high also the direction of flow of a fluid though the filter body such a space density distribution may be attained by breaking down the sheet of cellulose-spanbond nonwoven cloth into fluffy fibers and compressing to mold the fluffy fibers into the shape of the filter body. However, due to the intrinsic elasticity of the cellulose-spanbond nonwoven cloth, the space density of the filter body is changed by the pressure produced by the flow of a fluid through the filter body. As a result, a space density distribution contrary to the theory of depth layer filtration will be established. That is, the space density will change now from high to low along the flowing direction of the fluid, and the desired function of the filter will be lost. In order that the space density distribution of the filter body may not be changed by the pressure of the fluid flowing through the filter body, the sheet of cellulose-spanbond nonwoven cloth may be closely wound to such an extent that no space exists between the fibers when, for example, the sheet of cellulose-spanbond nonwoven cloth is shaped into the form of a roll. However, when the filter body is made in the manner described above, required filtering spaces cannot be secured.

## SUMMARY OF THE INVENTION

It is an object of the present invention to provide a method of making a roll-shaped filter body by the use of elastic cellulose-spanbond nonwoven cloth. In the filter body made by the method of the present invention, the space density changes continuously from high to low from the inner peripheral side toward the outer peripheral side, and this space density distribution is not changed by the pressure of a fluid flowing through the filter body.

In accordance with the present invention which attains the above object, there is provided a method of making a filter body of a filter of depth layer type by helically winding a braid of a filtering material around a bobbin having many pores and reciprocating in its axial direction while rotating, wherein cellulose-spanbond nonwoven cloth is used as the material of the braid, and wherein the braid is wound clockwise around the bobbin during the reciprocating movement of the bobbin in one direction and counter-clockwise around the bobbin during the reciprocating movement of the bobbin in the other direction so that they intersect each other, the clockwise wound braid and the counter-clockwise wound braid successively stacked in aslant relation while partly overlapping eeach other to form a roof-shaped structure in one cycle, and the height of the roof-shaped structure formed in each of later cycles is progressively increased from the inner peripheral side toward the outer peripheral side of the filter body so as to establish a space density distribution in which the space density increases progressively from the outer peripheral side toward the inner peripheral side of the filter body.

## BRIEF DESCRIPTION OF THE DRAWINGS

Fig. 1 is a schematic sectional view of a filter body made by an embodiment of the method according to the present invention.

Fig. 2 shows schematically how a braid formed of cellulose-spanbond nonwoven cloth is stacked up on a bobbin.

Fig. 3 is a view of the braid being wound helically around the bobbin.

Fig. 4 is a perspective view of the bobbin.

Fig. 5 illustrates how a web of cellulose-spanbond nonwoven cloth is turned into the form of the braid.

Fig 6 is a section view taken along the line VI-VI in Fig. 5.

## DESCRIPTION OF THE PREFERRED EMBODIMENT

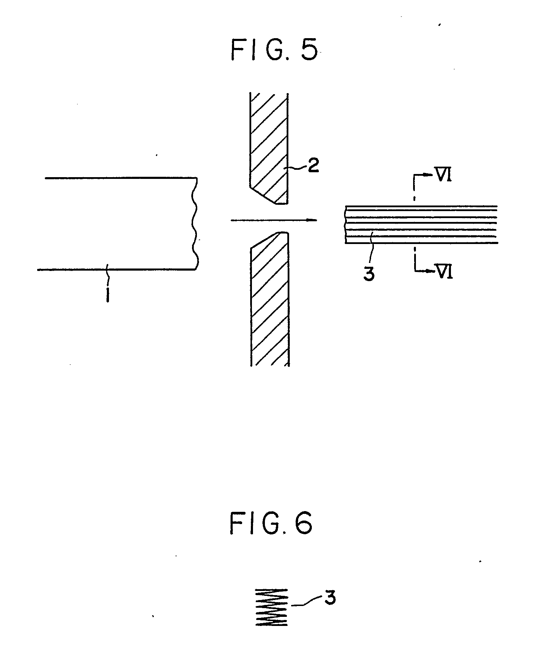

When a sheet of cellulose-spanbond nonwoven cloth is broken down to its smallest possible units, single fibers are its minimum units. However, it is difficult to handle such single fibers as a matter of fact. Therefore, a sheet of cellulose-spanbond nonwoven cloth is cut into a continuous web having a width of for example, 30 mm. The width of the web is preferably determined taking into consideration an estimated change in the pressure imparted by a fluid flowing through the filtering material. Since this web 1 has a non-uniform thickness, the continuous web 1 is passed through a hold 2 narrower than the width of the web 1 to be shaped into the form of a braid 3 as shown in Fig.5. This braid 3 has a relatively large thickness in addition to its relatively large width as shown in Fig.6. Although twisting the braid 3 is advantageous from the aspect of securing a sufficient mechanical strength, it is necessary to carefully select the amount of twisting from the aspect of securing the desired space. This is because imparting excessive twist to the braid 3 will form an unnecessarily large space or when the braid 3 is wound as described later. Although twisting the braid 3 is not a necessary requirement, the braid 3 is preferably twisted by about 10 turns per meter of the braid 3.

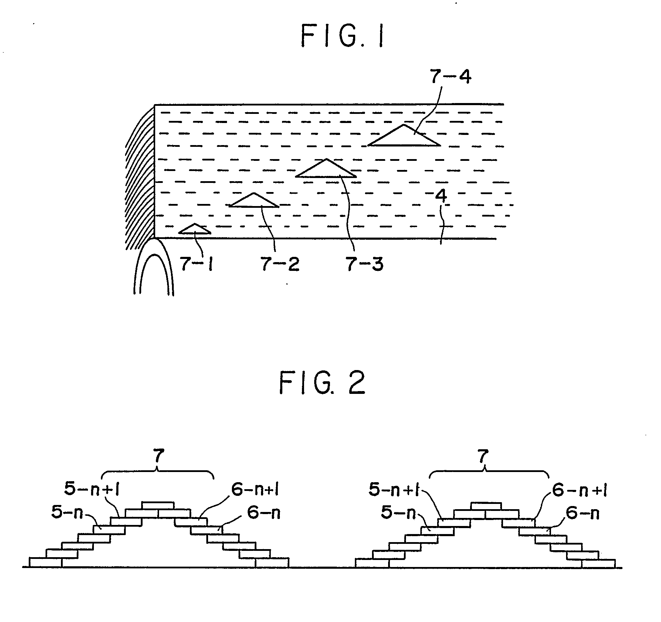

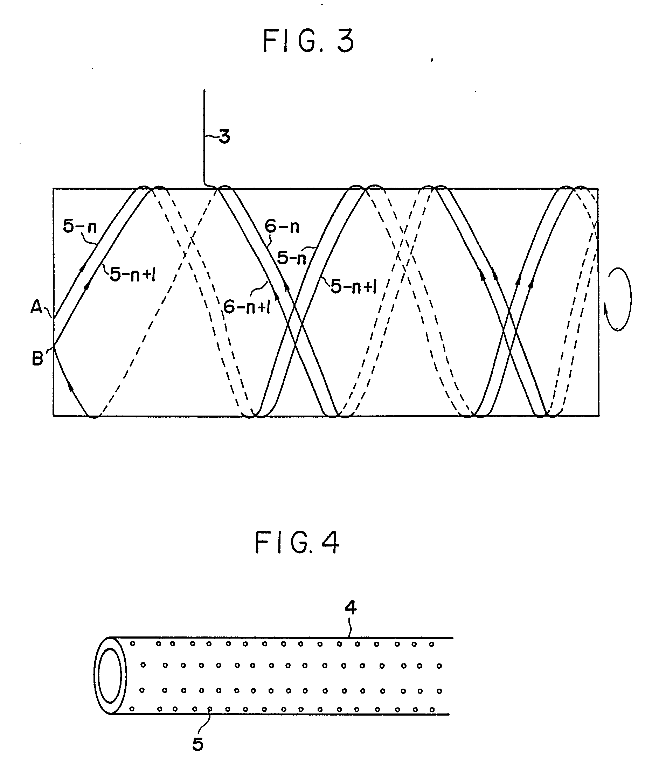

Such a braid 3 is wound around a bobbin 4 as shown in Fig.4 to make a filter body. As shown in Fig.4, the bobbin 4 is provided with many pores 5 permitting unobstructed flow of a fluid therethrough and is made of a metal material, a ceramic material, a resin material or the like. At the start of winding the braid 3 around the bobbin 4, the braid 3 is wound under a strong tension so that the braid 3 makes intimate contact with the bobbin 4. In the filter body of the present invention, the volume of the spaces or cavities must be progressively increased from the inner peripheral side toward the outer peripheral side of the filter body. When the braid 3 is wound under a low tension, apparent cavities can be secured. However, these cavities will be compressed by the pressure which changes as a fluid flows through the filter body. To avoid such a situation, the present invention employs a unique manner of stacking or superposing the braid 3. That is, as shown in Fig 3, the bobbin 4 is rotated, and the position of winding the braid 3 around the bobbin 4 is reciprocated in the longitudinal direction of the bobbin 4, thereby helically winding the braid 3 around the bobbin 4. In lieu of reciprocation of the position of winding the braid 3 around the bobbin 4, the bobbin 4 may be reciprocated while rotating. Herein, the braid 3 wound around the bobbin 4 by the shift of the winding position of the braid 3 in one direction at an n-th time of reciprocating movement is distinguished from the braid 3 wound around the bobbin 4 by the shift of the winding position of the braid 3 in the other direction at the n-th time of reciprocating movement, and the former and the latter are referred to as a clockwise wound braid 5-n and a counter-clockwise wound braid 6-n respectively. The terms "clockwise " and " counter-clockwise " are used merely for the sake of convenience and do not in any way specify the mode of winding by the combination of the reciprocating movement and the rotating movement which are relative movements. After the clockwise wound braid 5-n is provided on the bobbin 4, the counter-clockwise wound braid 6-n is provided on the bobbin 4 in the opposite direction. Therefore, the braids 5-n and 6-n intersect each other at a plurality of positions on the bobbin 4. In Fig.3, the symbol B designates the end position of the counter-clockwise wound braid 6-n, that is, the start position of the clockwise wound braid 5-n + 1, and A designates the start position of the clockwise wound braid 5-n. The position B is slightly displaced from the position A as shown so that the next clockwise wound braid 5-n + 1 partly overlaps the clockwise wound braid 5-n in aslant relation. Similarly, the next counter-clockwise wound braid 6-n + 1 partly overlaps the counter-clockwise wound braid 6-n in aslant relation. Such a manner of stacking the clockwise and counter-clockwise wound braids is repeated. Consequently, a group of helically running and partly overlapping clockwise wound braids 5-n, 5-n + 1--- and a similar group of counter-clockwise wound braids 6-n, 6-n + 1, --- are combined to support each other in a manner as shown in Fig. 2, thereby constituting a plurality of roof-like stacks 7. Each roof-like stack 7 defines an internal cavity and has a mechanical strength large enough to substantially withstand a fluid pressure tending to cause deformation of its shape. In this manner, the braids are successively wound to form roof-shaped structures 7-1, 7-2, 7-3, and 7-4 as shown in Fig.1. Fig.1 shows that the height of these roof-shaped structures 7-1 to 7-4 increases progressively from the inner peripheral side toward the outer peripheral side of the filter body. The larger the height of the roof-shapes structures, the larger is their internal cavity. Thus, the volume of the cavities increases progressively form the inner peripheral side toward the outer peripheral side of the filter body. In other words, the filter body made in the manner described above has a space density distribution in which the space density increases progressively from the outer peripheral side toward the inner peripheral side of the filter body.

Therefore, when a fluid containing impurities is passed from the outer peripheral side toward the inner peripheral side of the filter body, the roof-shaped structures 7 are not deformed and retain their internal cavities regardless of pressure changes caused by the flow of the fluid through the filter body, so that the impurities can be efficiently arrested and removed from fluid according to the theory of depth layer filtration.

In will be understood form the foregoing detailed description that the present invention provides a method of making a highly reliable filter body in which cellulose-spanbond nonwoven cloth having a high elasticity is used as a filtering material, and a braid formed of such a filtering material is wound around a bobbin to form roof-shaped structures defining internal cavities of progressively changing volumes for establishing the desired space density distribution in the radial direction.

## Claims

1. A method of making a filter body of a filter of depth layer type by helically winding a braid (3) of a filtering material around a bobbin (4) having many pores (5) and reciprocating in its axial direction while rotating, wherein cellulose-spanbond nonwoven cloth is used as the material of said braid (3), and wherein said braid is wound clockwise around said bobbin (4) during the reciprocating movement of said bobbin in one direction and counter-clockwise around said bobbin (4) during the reciprocating movement of said bobbin in the other direction so that they intersect each other, said clockwise wound braid (5-n) and said counterclockwise wound braid (6-n) being successively stacked in aslant relation while partly overlapping each other to form a roof-shaped structure (7) in one cycle, and the height of said roof-shaped structures formed in each of later cycles is progressively increased from the inner peripheral side toward the outer peripheral side of said filter body so as to establish a space density distribution in which the space density increases progressively from the outer peripheral side toward the inner peripheral side of said filter body.

2. The method of claim 1, wherein, instead of causing the reciprocating movement of said bobbin, the position of winding said braid (3) around said bobbin (4) is reciprocated along the length of said bobbin.

# FIG. 1

7-4

7-1    7-2    7-3

4

# FIG. 2

7

5-n+1    6-n+1
5-n      6-n

7

5-n+1    6-n+1
5-n      6-n

FIG. 3

FIG. 4

# FIG. 5

2

VI

3

VI

I

# FIG. 6

3